# FASCICULE DE BREVET EUROPEEN

(11) **EP 3 776 022 B1**
(45) Date de publication et mention de la délivrance du brevet: **06.11.2024**
(21) Numéro de dépôt: 19719553.0
(22) Date de dépôt: 27.03.2019
(51) Int. Cl.: G02B 5/08, G02B 5/22, G02B 5/28, C03C 17/36

(54) **MIROIR COLORE**
FARBIGER SPIEGEL
COLOURED MIRROR

(30) Priorité: 28.03.2018 FR 1852664
(43) Date de publication de la demande: 17.02.2021
(73) Titulaire: Saint-Gobain Glass France, 92400 Courbevoie (FR)
(72) Inventeur: MARIANI, Silvia, 93310 LE PRE SAINT-GERVAIS (FR)
(74) Mandataire: Saint-Gobain Recherche
(86) Numéro de dépôt international: PCT/FR2019/050701
(87) Numéro de publication internationale: WO 2019/186064

(56) Documents cités:
- WO-A1-2011/090784
- WO-A1-2011/090784
- WO-A1-2015/177474
- WO-A1-2015/177474
- US-A1- 2014 211 332
- US-A1- 2014 211 332

## Description

L'invention se rapporte au domaine des miroirs. Elle concerne plus particulièrement des miroirs spéculaires, dans lesquels un utilisateur peut se mirer. De tels miroirs sont par exemple disposés à l'intérieur d'habitations, par exemple dans des salles de bain, ou sont utilisés comme éléments de pièces d'ameublement (portes de placard...) ou de décoration. Ces miroirs comprennent généralement un substrat de verre revêtu en face 2 (la face opposée à celle tournée vers l'utilisateur) d'une couche réfléchissante en argent, laquelle est revêtue d'une couche de peinture. La peinture a une fonction optique, celle d'empêcher toute visibilité au travers du miroir en bloquant le passage des rayons lumineux transmis à travers la couche d'argent. La peinture a également pour fonction de protéger la couche d'argent contre la corrosion. Le document wo 2015/177474 A1 décrit un miroir spéculaire ayant en réflexion une teinte rose ou tendant vers le rose.

Le but de l'invention est de proposer un miroir ayant en réflexion une teinte bronze ou dorée.

A cet effet, l'invention a pour objet un miroir spéculaire selon la revendication 1.

L'invention a aussi pour un objet un procédé d'obtention du miroir précité, selon la revendication

Par l'expression « revêtu », on entend que la couche qui revêt le substrat ou une autre couche est déposée au-dessus dudit substrat ou de cette autre couche, mais pas nécessairement en contact avec eux. Lorsqu'une première couche est disposée « au-dessus » d'une deuxième couche, on entend que la première couche est plus éloignée du substrat que la deuxième couche.

Par l'expression « à base de », on entend en général que la couche comprend au moins 50% en poids du composé en question, en particulier au moins 60%, et même 70% ou 80%, voire 90% en poids du composé en question. La couche à base de nitrure de silicium comprend avantageusement au moins 80%, voire 90% de nitrure de silicium. Lorsqu'elle est déposée par pulvérisation cathodique assistée par champ magnétique, elle comprend avantageusement une petite quantité d'aluminium, car le dopage d'une cible de silicium par de l'aluminium permet d'accélérer le dépôt de la couche. On ne préjuge pas ici de la stoechiométrie de la couche de nitrure de silicium. La couche métallique est de préférence constituée du métal ou de l'alliage précités.

De préférence, l'empilement de couches minces est au contact du substrat de verre et de la couche réfléchissante d'argent. Le miroir est alors de préférence constitué du substrat de verre, de l'empilement de couches minces, de la couche réfléchissante d'argent et de la couche de peinture. La couche de peinture est normalement au contact de la couche réfléchissante d'argent.

La notion de contact n'exclut toutefois pas la présence de traitements de surface classiquement utilisés dans le procédé d'argenture, lorsque la couche d'argent est déposée par ce procédé. Dans ce dernier cas, il est avantageux de traiter la surface sur laquelle l'argent sera déposé par une solution contenant des chlorures d'étain et de palladium. Ces traitements peuvent former des couches extrêmement minces détectables uniquement par des techniques analytiques poussées.

L'empilement de couches minces ne comprend de préférence qu'une seule couche métallique. L'empilement de couches minces comprend de préférence une seule couche à base de nitrure de silicium disposée au-dessus de la couche métallique, ou une seule couche à base de nitrure de silicium disposée en-dessous de la couche métallique, ou deux couches à base de nitrure de silicium disposées de part et d'autre de la couche métallique.

Le substrat de verre est de préférence un substrat plan. L'épaisseur du substrat de verre est de préférence comprise dans un domaine allant de 1 à 19 mm, notamment de 2 à 12 mm et même de 3 à 9 mm.

Le verre est de préférence un verre silico-sodo-calcique, mais d'autres types de verres comme les borosilicates ou les aluminosilicates peuvent être employés. Le verre est de préférence obtenu par flottage. Le verre est de préférence incolore. Il comprend de préférence une teneur pondérale en fer, exprimée en Fe₂O₃, comprise entre 0,01 et 0,20%, notamment entre 0,04 et 0,12%.

La couche réfléchissante d'argent est déposée par argenture. On entend par argenture le procédé classiquement utilisé pour la fabrication de miroirs, et comprenant le dépôt par voie liquide d'un sel d'argent et d'un agent réducteur.

La couche réfléchissante d'argent possède de préférence une épaisseur physique allant de 50 à 200 nm, notamment de 50 à 100 nm.

Le miroir est de préférence « sans cuivre », au sens où la couche réfléchissante d'argent n'est pas recouverte par une couche de cuivre.

Dans le miroir, la couche de peinture est généralement obtenue par séchage d'une peinture liquide déposée sur le substrat. Dans l'ensemble du présent texte, le terme « peinture » sera employé pour qualifier la peinture à l'état sec, tandis que le terme « peinture liquide » sera utilisé pour qualifier la peinture à l'état liquide, destinée à être déposée sur le substrat.

La peinture liquide est de préférence à base aqueuse ou sans solvant. Par « base aqueuse » on entend que la peinture liquide comprend moins de 10%, notamment 5% en poids de solvant organique, voire ne comprend pas de solvants organiques.

Le pourcentage pondéral d'extrait sec de la peinture liquide est de préférence d'au moins 50%, voire 60%, notamment de 60 à 70% dans le cas de peintures liquides à base aqueuse. Il peut être de 100% dans le cas de peinture liquide sans solvant.

La couche de peinture comprend de préférence au moins une résine et au moins une charge minérale, dont au moins un pigment. Au moins une résine est de préférence choisie parmi les résines acryliques, les résines polyuréthanes, les résines époxydes et les résines alkydes. Au moins une charge minérale est avantageusement choisie parmi l'oxyde de zinc, le sulfate de baryum, les phosphates de zinc, notamment l'orthophosphate de zinc, le talc, le carbonate de calcium, le mica, l'oxyde de titane, le noir de carbone et leurs mélanges. Les charges minérales permettent d'améliorer la résistance à la corrosion de la couche d'argent et/ou d'obtenir l'opacité ou la teinte désirée. La couche de peinture ne contient de préférence pas de plomb. La couche de peinture comprend de préférence 20 à 50% en poids de résines et 30 à 80% en poids de charges minérales. La couche de peinture peut en outre comprendre divers additifs, tels que des agents antimousse, des biocides ou des tensioactifs. La couche de peinture liquide est de préférence déposée au rideau, par pulvérisation ou au rouleau. Elle peut être déposée en plusieurs passes.

L'étape de séchage est de préférence mise en oeuvre dans un four, à une température comprise entre 50 et 250°C, notamment entre 100 et 200°C. Le temps de séchage est de préférence de 2 à 60 minutes, notamment de 5 à 30 minutes. L'étape de séchage est de préférence précédée d'une étape de pré-séchage à plus basse température, notamment entre 30 et 60°C pendant 5 à 60 minutes.

La couche de peinture (après séchage) présente de préférence une épaisseur comprise entre 40 et 350 pm, notamment entre 70 et 300 um, voire entre 100 et 250 µm.

L'empilement de couches minces est de préférence déposé par pulvérisation cathodique assistée par champ magnétique. D'autres techniques sont toutefois possibles, par exemple les techniques de dépôt chimique en phase vapeur (CVD).

Selon un mode de réalisation, l'empilement de couches minces ne comprend qu'une seule couche à base de nitrure de silicium. Cette dernière est notamment disposée au-dessus ou en-dessous de l'unique couche métallique de l'empilement, de préférence en contact avec cette couche métallique.

Selon un autre mode de réalisation, l'empilement de couches minces ne comprend que deux couches à base de nitrure de silicium. Ces dernières sont de préférence disposées de part et d'autre de l'unique couche métallique de l'empilement, chacune étant de préférence en contact avec cette couche métallique.

L'empilement de couches minces comprend avantageusement, en contact avec la couche réfléchissante d'argent, une couche d'adhésion. Cette couche, destinée à améliorer l'adhésion de la couche d'argent est de préférence en oxyde métallique, notamment en oxyde de titane. La couche d'adhésion en oxyde de titane est de préférence déposée par pulvérisation cathodique assistée par champ magnétique au moyen d'une cible céramique en oxyde de titane, de préférence sans ajout d'oxygène dans le plasma ou avec un ajout en faible quantité. La couche d'adhésion possède de préférence une épaisseur physique allant de 2 à 20 nm, notamment de 3 à 10 nm.

L'empilement de couches minces est de préférence constitué de 2, 3, ou 4 couches minces, notamment de 3 ou 4 couches minces.

L'empilement de couches minces est par exemple constitué, successivement à partir du substrat de verre, d'une couche métallique (avantageusement en contact avec le substrat de verre) - notamment en alliage de nickel et de chrome, puis d'une couche à base de nitrure de silicium, puis d'une couche d'adhésion (avantageusement en contact avec la couche réfléchissante d'argent).

Selon un autre exemple avantageux, l'empilement de couches minces est constitué, successivement à partir du substrat de verre, d'une première couche à base de nitrure de silicium (avantageusement en contact avec le substrat de verre), puis d'une couche métallique - notamment en alliage de nickel et de chrome, puis d'une deuxième couche à base de nitrure de silicium, puis d'une couche d'adhésion (avantageusement en contact avec la couche réfléchissante d'argent) .

L'ordre des couches ainsi que leurs épaisseurs influent sur la couleur obtenue en réflexion. Il est ainsi possible d'obtenir des teintes plus ou moins soutenues, allant du bronze au doré.

L'épaisseur physique de la couche à base de nitrure de silicium (dans le cas d'un empilement ne comprenant qu'une seule couche de ce type), ou la somme des épaisseurs physiques de chaque couche à base de nitrure de silicium (dans le cas d'un empilement comprenant plusieurs de ces couches), est selon l'invention comprise dans un domaine allant de 10 à 200 nm, notamment de 10 à 100 nm, voire de 10 à 50 nm ou encore de 10 à 30 nm. Il a été observé que les épaisseurs plus élevées donnaient des teintes plutôt bronze.

L'épaisseur physique de la couche métallique (dans le cas d'un empilement ne comprenant qu'une seule couche de ce type), ou la somme des épaisseurs physiques de chaque couche métallique (dans le cas d'un empilement comprenant plusieurs de ces couches), est selon l'invention comprise dans un domaine allant de 2 à 10 nm, notamment de 2 à 7 nm, ou de 3 à 10 nm. Des épaisseurs supérieures à 10 nm confèrent des teintes très sombres tandis que des épaisseurs inférieures à 2 nm confèrent des teintes très claires.

Selon un mode de réalisation de l'invention, la ou au moins une couche à base de nitrure de silicium présente, à une longueur d'onde de 550 nm, un indice de réfraction n allant de 2,2 à 2,6, notamment de 2,3 à 2,5, et un coefficient d'extinction k allant de 0,02 à 0,6, notamment de 0,03 à 0,3. On obtient ainsi des miroirs présentant une teinte plus soutenue, en particulier dans le bronze.

Le coefficient d'extinction correspond à la partie imaginaire de l'indice de réfraction complexe. Ces paramètres peuvent être mesurés de manière connue par ellipsométrie. De telles valeurs peuvent être obtenues en déposant la couche à base de nitrure de silicium par pulvérisation cathodique réactive assistée par champ magnétique, grâce à un choix judicieux de la proportion d'azote dans le plasma, plus particulièrement en diminuant la proportion d'azote par rapport aux conditions habituelles de dépôt des couches à base de nitrure de silicium. Dans les conditions habituelles, les débits d'azote et d'argon sont sensiblement égaux, et donnent des indices de réfraction de l'ordre de 2,1 et des coefficients d'extinction de l'ordre de 0. En réduisant le débit d'azote, par exemple de manière à avoir un débit d'azote environ trois fois plus faible que le débit d'argon, on peut obtenir les gammes de valeur préférées précitées.

Le miroir selon l'invention possède de préférence les coordonnées colorimétriques en réflexion suivantes : L* allant de 40 à 85, notamment de 50 à 85, voire de 60 à 80, a* allant de 0 à 20, notamment de 1 à 12, voire de 1 à 10, b* allant de 5 à 30, notamment de 10 à 25, voire de 12 à 18. De faibles valeurs de a* donnent des teintes plutôt dorées, et des valeurs de a* plus élevées correspondent à des teintes bronze. Les coordonnées colorimétriques sont calculées à partir d'un spectre en réflexion entre 380 et 780 nm, en prenant en compte l'illuminant D65 et l'observateur de référence CIE-1964 (10°). La réflexion lumineuse du miroir (également en prenant en compte l'illuminant D65 et l'observateur de référence CIE-1964 (10°)) est de préférence d'au moins 50%, notamment 60%. La transmission lumineuse est quant à elle nulle du fait de la présence de la couche de peinture, qui est opaque.

Le miroir présente de préférence une bonne résistance à la corrosion. Typiquement, la corrosion de bord est d'au plus 1,5 mm, voire 1,2 mm et même 1,0 mm après un test CASS de 120 heures selon la norme ISO 9227 :2012. Le test CASS est un test de résistance au brouillard salin cupro-acétique.

L'invention est illustrée par les exemples non limitatifs qui suivent.

### Exemple 1

Un substrat de verre clair commercialisé par la Demanderesse sous la référence commerciale Planiclear a été revêtu d'un empilement de couches minces par pulvérisation cathodique assistée par champ magnétique (procédé magnétron).

L'empilement consiste successivement en :
- une couche d'un alliage de nickel et de chrome, déposée directement sur la surface du verre, et ayant une épaisseur physique de 5 nm, puis
- une couche de nitrure de silicium comprenant 8% en poids d'aluminium , et ayant une épaisseur physique de 10 nm, déposée à l'aide d'une cible de silicium et d'aluminium, sous un flux de gaz plasmagène comprenant 47% en volume d'azote et 53% en volume d'argon, puis,
- une couche d'adhésion en oxyde de titane d'une épaisseur physique de 5 nm, déposée à l'aide d'une cible céramique en oxyde de titane sous-stœchiométrique, en l'absence d'oxygène dans le plasma.

Le substrat muni de cet empilement a ensuite été revêtu d'une couche réfléchissante d'argent par un procédé d'argenture. L'épaisseur de la couche d'argent est de 70 nm. De manière connue, la couche d'argent a ensuite été revêtue d'une couche de peinture.

Les valeurs de n et k à 550 nm de la couche de nitrure de silicium sont respectivement de 2,08 et 0,00.

Les coordonnés colorimétriques en réflexion du miroir obtenu (illuminant D65 et observateur de référence CIE-1964) sont les suivantes : L*=74,5, a*=1,43 et b*=15,40. La teinte en réflexion est dorée.

### Exemple 2

Un substrat de verre clair commercialisé par la Demanderesse sous la référence commerciale Planiclear a été revêtu d'un empilement de couches minces par pulvérisation cathodique assistée par champ magnétique (procédé magnétron).

L'empilement consiste successivement en :
- une première couche de nitrure de silicium comprenant 8% en poids d'aluminium , et ayant une épaisseur physique de 50 nm, déposée à l'aide d'une cible de silicium et d'aluminium, sous un flux de gaz plasmagène comprenant 26% en volume d'azote et 74% en volume d'argon, puis,
- une couche d'un alliage de nickel et de chrome, déposée directement sur la surface du verre, et ayant une épaisseur physique de 7 nm, puis
- une deuxième couche de nitrure de silicium comprenant 8% en poids d'aluminium , et ayant une épaisseur physique de 50 nm, déposée comme la première couche de nitrure de silicium, puis,
- une couche d'adhésion en oxyde de titane d'une épaisseur physique de 5 nm, déposée à l'aide d'une cible céramique en oxyde de titane sous-stœchiométrique, en l'absence d'oxygène dans le plasma.

Le substrat muni de son empilement a ensuite été revêtu d'une couche réfléchissante d'argent par un procédé d'argenture. L'épaisseur de la couche d'argent est de 70 nm. De manière connue, la couche d'argent a ensuite été revêtue d'une couche de peinture.

Les valeurs de n et k à 550 nm de la couche de nitrure de silicium sont respectivement de 2,42 et 0,09.

Les coordonnés colorimétriques en réflexion du miroir obtenu (illuminant D65 et observateur de référence CIE-1931) sont les suivantes : L*=68,1, a*=6,17 et b*=13,88. La teinte en réflexion est bronze.

## Revendications

1. Miroir spéculaire comprenant un substrat de verre revêtu sur une de ses faces, successivement à partir dudit substrat de verre, d'un empilement de couches minces, d'une couche réfléchissante d'argent déposée par argenture puis d'une couche de peinture, **caractérisé en ce que** ledit empilement de couches minces comprend :
- au moins une couche métallique à base d'un métal choisi parmi le niobium et le titane ou à base d'un alliage de nickel et de chrome dont l'épaisseur physique de ladite couche métallique, ou la somme des épaisseurs physiques de chaque couche métallique est comprise dans un domaine allant de 2 à 10 nm,et
- au moins une couche à base de nitrure de silicium dont l'épaisseur physique de ladite couche à base de nitrure de silicium, ou la somme des épaisseurs physiques de chaque couche à base de nitrure de silicium est comprise dans un domaine allant de 10 à 200 nm.

2. Miroir selon la revendication 1, dans lequel l'empilement de couches minces est au contact du substrat de verre et de la couche réfléchissante d'argent.

3. Miroir selon l'une des revendications précédentes, dans lequel la couche de peinture est au contact de la couche réfléchissante d'argent.

4. Miroir selon l'une des revendications précédentes, dans lequel la couche métallique est à base d'un alliage de nickel et de chrome.

5. Miroir selon l'une des revendications précédentes, dans lequel l'empilement de couches minces ne comprend qu'une seule couche métallique.

6. Miroir selon la revendication précédente, dans lequel l'empilement de couches minces comprend une seule couche à base de nitrure de silicium disposée au-dessus de la couche métallique, ou une seule couche à base de nitrure de silicium disposée en-dessous de la couche métallique, ou deux couches à base de nitrure de silicium disposées de part et d'autre de la couche métallique.

7. Miroir selon l'une des revendications précédentes, dans lequel la couche réfléchissante d'argent possède une épaisseur physique allant de 50 à 200 nm.

8. Miroir selon l'une des revendications précédentes, dans lequel l'empilement de couches minces comprend, en contact avec la couche réfléchissante d'argent, une couche d'adhésion en oxyde métallique, notamment en oxyde de titane.

9. Miroir selon l'une des revendications précédentes, dans lequel l'empilement de couches minces est constitué de deux, trois, ou quatre couches minces

10. Miroir selon l'une des revendications précédentes, dans lequel la ou au moins une couche à base de nitrure de silicium présente, à une longueur d'onde de 550 nm, un indice de réfraction n allant de 2,2 à 2,6 et un coefficient d'extinction k allant de 0,02 à 0,06.

11. Miroir selon l'une des revendications précédentes, qui possède les coordonnées colorimétriques en réflexion suivantes : L* allant de 40 à 85, a* allant de 0 à 20, b* allant de 5 à 30.

12. Procédé d'obtention d'un miroir selon l'une des revendications précédentes, comprenant une étape de dépôt de l'empilement de couches minces sur un substrat de verre, puis une étape de dépôt, par argenture, de la couche réfléchissante d'argent sur ledit empilement de couches minces, puis une étape de dépôt d'une couche de peinture liquide sur ladite couche d'argent, puis une étape de séchage de ladite couche de peinture liquide.

13. Procédé selon la revendication précédente, dans lequel l'empilement de couches minces est déposé par pulvérisation cathodique assistée par champ magnétique.

## Patentansprüche

1. Spiegelnder Spiegel, umfassend ein Glassubstrat, das auf einer seiner Seiten nacheinander von dem Glassubstrat mit einem Stapel dünner Schichten, einer reflektierenden Silberschicht, die durch Versilberung aufgebracht wurde, dann einer Farbschicht beschichtet ist, **dadurch gekennzeichnet, dass** der Stapel dünner Schichten umfasst:
- mindestens eine Metallschicht auf Basis eines Metalls, das aus Niob und Titan ausgewählt ist, oder auf Basis einer Nickel- und Chrom-Legierung, deren physische Dicke der Metallschicht oder Summe der physischen Dicken jeder Metallschicht in einem Bereich von 2 bis 10 nm liegt, und
- mindestens eine Schicht auf Basis von Siliziumnitrid, deren physische Dicke der Schicht auf Basis von Siliziumnitrid oder Summe der physischen Dicken jeder Schicht auf Basis von Siliziumnitrid in einem Bereich von 10 bis 200 nm liegt.

2. Spiegel nach Anspruch 1, wobei der Stapel dünner Schichten in Berührung mit dem Glassubstrat und der reflektierenden Silberschicht ist.

3. Spiegel nach einem der vorstehenden Ansprüche, wobei die Farbschicht mit der reflektierenden Silberschicht in Berührung ist.

4. Spiegel nach einem der vorstehenden Ansprüche, wobei die Metallschicht auf einer Nickel- und Chrom-Legierung basiert.

5. Spiegel nach einem der vorstehenden Ansprüche, wobei der Stapel dünner Schichten nur eine einzige Metallschicht umfasst.

6. Spiegel nach dem vorstehenden Anspruch, wobei der Stapel dünner Schichten eine einzelne Schicht auf Basis von Siliziumnitrid, die über der Metallschicht abgeschieden ist, oder eine einzelne Schicht auf Basis von Siliziumnitrid, die unter der Metallschicht abgeschieden ist, oder zwei Schichten auf Basis von Siliziumnitrid umfasst, die auf beiden Seiten der Metallschicht abgeschieden sind.

7. Spiegel nach einem der vorstehenden Ansprüche, wobei die reflektierende Silberschicht eine physische Dicke von 50 bis 200 nm besitzt.

8. Spiegel nach einem der vorstehenden Ansprüche, wobei der Stapel dünner Schichten in Berührung mit der reflektierenden Silberschicht eine Haftschicht aus Metalloxid, insbesondere aus Titanoxid, umfasst.

9. Spiegel nach einem der vorstehenden Ansprüche, wobei der Stapel dünner Schichten aus zwei, drei oder vier dünnen Schichten besteht.

10. Spiegel nach einem der vorstehenden Ansprüche, wobei die oder die mindestens eine Schicht auf Basis von Siliziumnitrid bei einer Wellenlänge von 550 nm einen Brechungsindex n von 2,2 bis 2,6 und einen Extinktionskoeffizienten k von 0,02 bis 0,06 aufweist.

11. Spiegel nach einem der vorstehenden Ansprüche, der die folgenden kolorimetrischen Koordinaten bei Reflektion besitzt: L* von 40 bis 85, a* von 0 bis 20, b* von 5 bis 30.

12. Verfahren zum Erhalten eines Spiegels nach einem der vorstehenden Ansprüche, umfassend einen Schritt des Abscheidens des Stapels dünner Schichten auf einem Glassubstrat, dann einen Schritt des Abscheidens, durch Versilberung, der reflektierenden Silberschicht auf den Stapel dünner Schichten, dann einen Schritt des Abscheidens einer flüssigen Farbschicht auf der Silberschicht, dann einen Schritt zum Trocknen der flüssigen Farbschicht.

13. Verfahren nach dem vorstehenden Anspruch, wobei der Stapel dünner Schichten durch Kathodenzerstäubung, unterstützt durch ein Magnetfeld, abgeschieden wird.

## Claims

1. A specular mirror comprising a glass substrate coated on one of the faces thereof, successively starting from said glass substrate, with a stack of thin layers, with a reflective silver layer deposited by silvering then with a layer of paint, **characterized in that** said stack of thin layers comprises:
- at least one metal layer based on a metal chosen from niobium and titanium or based on a nickel-chromium alloy wherein the physical thickness of the metal layer, or the sum of the physical thicknesses of each metal layer, is within a range from 2 to 10 nm, and
- at least one layer based on silicon nitride wherein the physical thickness of the layer based on silicon nitride, or the sum of the physical thicknesses of each layer based on silicon nitride, is within a range from 10 to 200 nm.

2. The mirror as claimed in claim 1, wherein the stack of thin layers is in contact with the glass substrate and with the reflective silver layer.

3. The mirror as claimed in either of the preceding claims, wherein the layer of paint is in contact with the reflective silver layer.

4. The mirror as claimed in one of the preceding claims, wherein the metal layer is based on a nickel-chromium alloy.

5. The mirror as claimed in one of the preceding claims, wherein the stack of thin layers comprises only a single metal layer.

6. The mirror as claimed in the preceding claim, wherein the stack of thin layers comprises a single layer based on silicon nitride positioned on top of the metal layer, or a single layer based on silicon nitride positioned underneath the metal layer, or two layers based on silicon nitride positioned on either side of the metal layer.

7. The mirror as claimed in one of the preceding claims, wherein the reflective silver layer has a physical thickness ranging from 50 to 200 nm.

8. The mirror as claimed in one of the preceding claims, wherein the stack of thin layers comprises, in contact with the reflective silver layer, an adhesion layer made of metal oxide, in particular made of titanium oxide.

9. The mirror as claimed in one of the preceding claims, wherein the stack of thin layers consists of two, three or four thin layers.

10. The mirror as claimed in one of the preceding claims, wherein the or at least one layer based on silicon nitride has, at a wavelength of 550 nm, a refractive index n ranging from 2.2 to 2.6 and an extinction coefficient k ranging from 0.02 to 0.06.

11. The mirror as claimed in one of the preceding claims, which has the following colorimetric coordinates in reflection: L* ranging from 40 to 85, a* ranging from 0 to 20, b* ranging from 5 to 30.

12. A process for obtaining a mirror as claimed in one of the preceding claims, comprising a step of depositing the stack of thin layers on a glass substrate, then a step of depositing, by silvering, the reflective silver layer on said stack of thin layers, then a step of depositing a layer of liquid paint on said silver layer, then a step of drying said layer of liquid paint.

13. The process as claimed in the preceding claim, wherein the stack of thin layers is deposited by magnetron sputtering.
